# EUROPEAN PATENT SPECIFICATION

(11) **EP 2 077 064 B1**
(45) Date of publication and mention of the grant of the patent: **08.06.2011**
(21) Application number: 07826811.7
(22) Date of filing: 22.10.2007
(51) Int. Cl.: H05B 37/02, H04N 5/64

(54) **A SYSTEM, METHOD AND COMPUTER-READABLE MEDIUM FOR DISPLAYING LIGHT RADIATION**
SYSTEM, VERFAHREN UND COMPUTERLESBARES MEDIUM ZUR ANZEIGE VON LICHTSTRAHLUNG
SYSTÈME, PROCÉDÉ ET SUPPORT LISIBLE PAR ORDINATEUR POUR AFFICHER UN RAYONNEMENT LUMINEUX

(30) Priority: 24.10.2006 EP 06122789
(43) Date of publication of application: 08.07.2009
(73) Proprietor: Koninklijke Philips Electronics N.V., 5621 BA Eindhoven (NL)
(72) Inventor: KWISTHOUT, Cornelis W., 5656 AE Eindhoven (NL)
(74) Representative: Uittenbogaard, Frank
(86) International application number: PCT/IB2007/054276
(87) International publication number: WO 2008/050281

(56) References cited:
- WO-A-01/99475
- WO-A-2005/062608
- WO-A-2007/107930

## Description

### FIELD OF THE INVENTION

This invention pertains in general to a visual display system suitable for including with or adding to display devices, such as television sets. Moreover, the invention relates to a method and computer-readable medium for operating such visual display system.

### BACKGROUND OF THE INVENTION

Visual display devices are well known and include cinematic film projectors, television sets, monitors, plasma displays, liquid crystal display LCD televisions, monitors, and projectors etc. Such devices are often employed to present images or image sequences to viewer.

The field of backlighting began in the 1960s due to the fact that televisions require a "darker" room for optimal viewing. Backlighting is in its simplest form white light, emitted from e.g. a light bulb, projected on a surface behind the visual display device. Backlighting has been suggested to be used to relax the iris and reduce eye strain.

During recent years the backlighting technology has become more sophisticated and there are several display devices on the market with integrated backlighting features that enables emitting colors with different brightness depending on the visual information presented on the display device.

The benefits of backlighting in general includes: a deeper and more immersive viewing experience, improved color, contrast and detail for best picture quality, and reduced eye strain for more relaxed viewing. Different advantages of backlighting require different settings of the backlighting system. Reduced eye strain may require slow changing colors and a more or less fixed brightness while more immersive viewing experience may require an extension of the screen content i.e. the same brightness changes with the same speed as the screen content.

European Patent Application EP-A 1 551 178 discloses a supplementary visual display system for use in conjunction with a display device including an image display region for presenting images to a viewer. The display system comprises one or more illumination sources that at least partially peripherally surround the image display region. A drawback of the system of the publication is that it does not enable both relaxed and immersive viewing experience.

Therefore a faster responding system may be desirable. The problem with a fast system is that it may give a restless picture in the peripheral view to the user. Thus, there is a conflict between both requirements for the current visual display systems as to make both an extension of the screen by means of a fast responding system and a slow responding system for relaxed viewing for the eyes.

Document WO 01/99475 A discloses methods and apparatus for executing a lighting program to control a plurality of light emitting diodes (LEDs) in response to at least one characteristics of an audio input only.

Document WO 2005/062608 A discloses a supplementary visual display system (10,200) for use in conjunction with a display device (40) including an image display region (50) for presenting images to a viewer (15).

Document WO 2007/107930 A discloses a display device including a plurality of image projection devices and a display. The display device provides received content to the display and provides image signals to the plurality of image projection devices. In response to the provided image signals, the plurality of image projection devices project images on an area of a display surface that is separate from the display.

None of the prior art documents disclose how to enable both relaxed and immersive viewing experience in an ambient backlighting system.

Hence, an improved visual display system, method, apparatus and computer readable medium would be advantageous allowing for increased performance, flexibility, cost effectiveness, deeper and more immersive viewing experience, and reduced eye strain for more relaxed viewing.

### SUMMARY OF THE INVENTION

Accordingly, the present invention preferably seeks to mitigate, alleviate or eliminate one or more of the above-identified deficiencies in the art and disadvantages singly or in any combination and solves at least the above mentioned problems by providing a system, method and computer-readable medium according to the appended patent claims.

According to one aspect of the invention, a system is provided, the system comprising a monitor unit configured to monitor an information signal, and to generate a first signal based at least partly on the information comprised in the information signal, a control unit configured to control properties of light radiation emitted from at least two illumination areas, based on the first signal and the position of each illumination area in the system, and the reaction time of each illumination area depending on the position of each illumination area in the system.

According to another aspect of the invention, a method is provided, the method comprising monitoring an information signal, generating a first signal based at least partly on the information comprised in the information signal, controlling properties of light radiation emitted from at least two illumination areas, based on the first signal and the relative position of each illumination area, and the reaction time of each illumination area depending on the relative position of each illumination area.

According to a further aspect of the invention, a computer-readable medium having embodied thereon a computer program for processing by a computer is provided. The computer program comprises a monitor code segment for monitoring an information signal, a generation code segment for generating a first signal based at least partly on the information comprised in the information signal, a control code segment for controlling properties of light radiation emitted from at least two illumination areas, based on the first signal and the relative position of each illumination area, and the reaction time of each illumination area depending on the relative position of each illumination area.

Further embodiments of the invention are defined in the dependent claims.

The invention combines two apparently conflicting features in backlighting sensation. One extreme is to make the whole viewing experience more relaxing by making the background of the TV smoothly adapting itself to the presented image content. The other extreme is to make an effect on the wall that in the corners of our eyes look like a natural continuation of the picture. With other words, the TV looks bigger than it actually is and the user has the same sensation as in a cinema where there are also things happening in the corners of the eyes. This requires that the backlighting action follows the screen content sufficiently fast.

Embodiments of the present invention combine both extremes to provide both sensations to the user simultaneously using a parameter that is already part of the Ambilight system but configured / used in a totally new way. This parameters is the "reaction time", also called "integration time", "rise / fall time" etc. This parameter defines how long a color that is not anymore present in the screen content should still remain in the current backlighting effect and how fast a new color should be dominant in the backlighting effect.

Embodiments of the present invention solve the problem that people want to have a more immersive viewing experience (the idea that they are looking at a much bigger screen) but they also do not want to have to restless effects in the corners of their eyes. Both requirements are conflicting in choosing the right backlighting effect.

An advantage of embodiments of the present invention is that the display system may be implemented in a very easy way, using existing parameters. The result will be a natural flow from the center of the attention (the action on TV) to a relaxing background setting.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which
Fig. 1 is a schematic illustration of a system according to an embodiment;
Fig. 2 is a schematic illustration of a system according to an embodiment;
Fig. 3 is a schematic illustration of a system according to an embodiment;
Fig. 4a is a schematic illustration of a system according to an embodiment;
Fig. 4b is a schematic illustration of a system according to an embodiment;
Fig. 5 is a schematic illustration of a method according to an embodiment; and
Fig. 6 is a schematic illustration of a method according to an embodiment; and
Fig. 7 is a schematic illustration of a computer-readable medium according to an embodiment.
Fig. 8 is a schematic illustration of a computer-readable medium according to an embodiment.

### DESCRIPTION OF EMBODIMENTS

Several embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

The following description focuses on embodiments of the present invention applicable to backlighting of visual display devices, such as cinematic film projectors, television sets, monitors, plasma displays, liquid crystal display LCD televisions, projectors etc. However, it will be appreciated that the invention is not limited to this application but may be applied to many other areas in which backlighting is desired.

The present invention provides a solution of smoothing the backlighting effect in order to make the backlight a peaceful continuation of the screen while still being able to stress or support actions happing on the television screen.

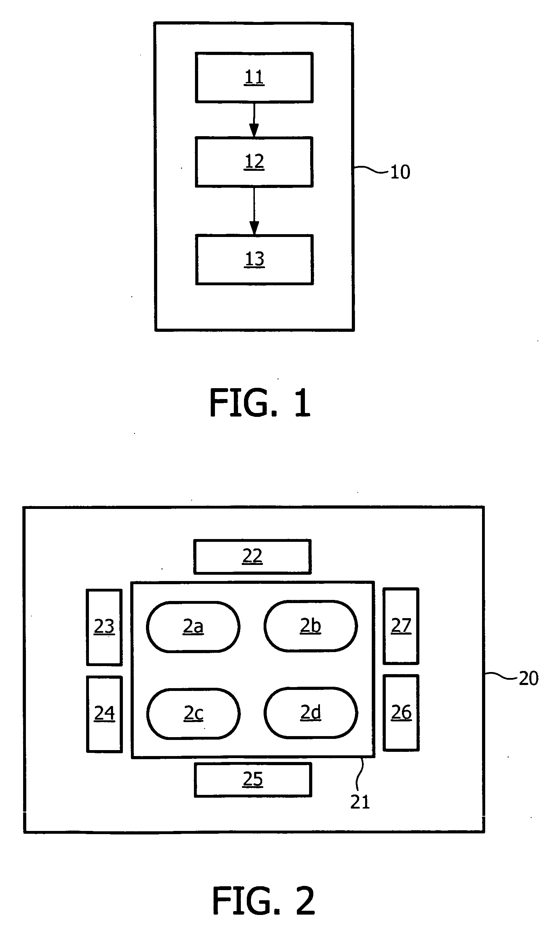

In an embodiment, a display system 10, according to Fig. 1, is provided. The system is used in conjunction with a display device comprising a display region capable of presenting an image or image sequence to a viewer. The system comprises
at least two illumination areas 13 capable of emitting light radiation, a monitor unit 11 for monitoring at least the intensity and color in one or more monitoring regions of the display region when an image or image sequence is presented thereon, and generating a first signal, and a control unit 12 for controlling light radiation emitted in use from the at least two illumination areas 13 in response to the signal and the position of each illumination area 13 within the system, and the reaction time of each illumination area depending on each illumination area position within the display system.

In an embodiment the illumination area comprises at least one source of illumination and one input for receiving a signal, e.g. from the monitor unit, that controls the brightness and or color of the illumination source.

The illumination source may e.g. be a light emitting diode, LED, for emitting light based on the image content on the display device. The LED is a semiconductor device that emits incoherent narrow-spectrum light when electrically biased in the forward direction. The color of the emitted light depends on the composition and condition of the semiconducting material used, and may be near-ultraviolet, visible or infrared. By combination of several LEDs, and by varying the input current to each LED, a light spectrum ranging from near-ultraviolet to infrared wavelengths may be presented.

The present invention is not limited to what kind of illumination source that is used to create the backlighting effect. Any source capable of emitting light may be used.

In an embodiment the display device and the illumination area may be comprised in a projector that in use projects an image on an area on a surface, such as a wall. The projected image comprises a display region capable of presenting an image or image sequence to a viewer. The display region may be centered in the projected image while around it the remaining part of the projection area is utilized by a backlighting effect, comprising at least two illumination areas having different reaction speed depending on their position within the projected image. In this embodiment the outer areas may still be generated differently from the areas closer to the projected display region.

In an embodiment the illumination area comprises three LEDs of the colors red, green and blue. By varying the input current to each LED a light spectrum of visible colors corresponding to the RGB standard may be presented.

In an embodiment display device and illumination area may be comprised in a LED video screen, such as a vidiwall. The LED video screen comprises a display region capable of presenting an image or image sequence to a viewer. The display region may be centered in the LED video screen while around it the remaining part of the LED video screen area is configured to provide a backlighting effect, comprising at least two illumination areas having different reaction speed depending on their position within the LED video screen. In this embodiment the outer areas of the LED video screen may still be generated differently from the areas closer to the display region.

Illumination sources other than LEDs are equally possible within the scope of the invention. Hence, the use of the term LED in this context should be appreciated as a light emitting system that is capable of receiving an electric signal and producing a color of light in response to the signal, e.g. light emitting polymers, semiconductor dies that produce light in response to current, organic LEDs, electro-luminescent strips, silicon based structures that emit light, and other such systems.

In an embodiment the illumination area comprises an illumination source for emitting light based on the image content of the display device. The illumination source may be incandescent sources such as filament lamps, photo-luminescent sources such as gaseous discharges, fluorescent sources, phosphorescence sources, lasers, electro-luminescent sources such as luminescent lamps, cathode luminescent sources using electronic satiation, luminescent sources including galvano-luminescent sources, crystallo-luminescent sources, kine-luminscent sources, thermo-luminescent sources, tribo-luminescent sources, sono-luminescent sources and radio-luminescent sources.

In an embodiment the light radiation color and brightness that each illumination area emit depends on the position of the illumination area within the display system and the color content of a monitoring region to which it is connected. In Fig. 2 the display region 21 is divided into several monitoring regions, each monitoring region being connected to at least one illumination area. Fig. 2 illustrates a display system 20 comprising four monitoring regions 2a, 2b, 2c, and 2d and six illumination areas 22, 23, 24, 25, 26, 27. Each illumination area is via a control unit and monitor unit, such as an electric drive circuit, connected to at least one monitoring region according to the following Table 1.

**Table 1**

| Illumination area | Monitoring region |
|---|---|
| 22 | 2a and 2b |
| 23 | 2a |
| 24 | 2c |
| 25 | 2c and 2d |
| 26 | 2d |
| 27 | 2b |

As may be observed in Table 1, illumination area 22 is connected to the combined color information of monitoring region 2a and 2b. Similarly, illumination area 25 is connected to the combined color information of monitoring segment 2c and 2d. The illumination areas 23, 24, 26, and 27 correspond to monitoring regions 2a, 2c, 2d, and, 2b, respectively.

If a monitoring region contains predominantly green colors at a point in time, the first signal from the monitor unit will comprise information to emit a green color and so forth. The monitor unit that via the control unit is connected to the illumination areas is responsive to color and brightness information presented in the monitoring regions and produce signals for the illumination areas, which are fed into the control unit for controlling the color and brightness of each illumination area in the display system.

Other algorithms picking the dominant color in a monitoring region and converting the color into a first signal may also be used. As an example, an averaging algorithm averaging all colors in the monitoring region may be used. As long as the way of generating the backlighting color from the source content is identical for all illumination areas within the display system, the invention may in some embodiments tweak the results to have a better-suited effect closer to the screen than further away. In this context to tweak means to manipulate the reaction speed etc, so that the first signal from each monitoring region is equally produced and that the subsequent processing in the control unit using different integration times etc is enabling the variation between different illumination areas.

In an embodiment the monitoring area is used to drive multiple illumination areas. In this case the input of the control unit would be identical for each monitoring region but due to a different setting of the reaction speed, the first signals will be different, close to the display region following the content of the monitoring region and far away from the display region a slower, average over time, of the content.

In an embodiment any combination of monitoring region to illumination area is possible. A common feature for all combinations is that the control unit utilizes different settings of the reaction speed or integration time, for different illumination areas depending on the relative position of this area to the display region.

The control unit is capable of controlling the light radiation of the illumination areas of the display system. It continuously receives signals from the monitor unit regarding the color and brightness of each illumination area and may use this information together with other criteria in order to control the light radiation color and brightness of the illumination areas.

In an embodiment the control unit controls the reaction time of each illumination area depending on each illumination area position within the display system together with the signal from the monitor unit. In this way the different illumination areas react temporally different to the signal from the monitor unit.

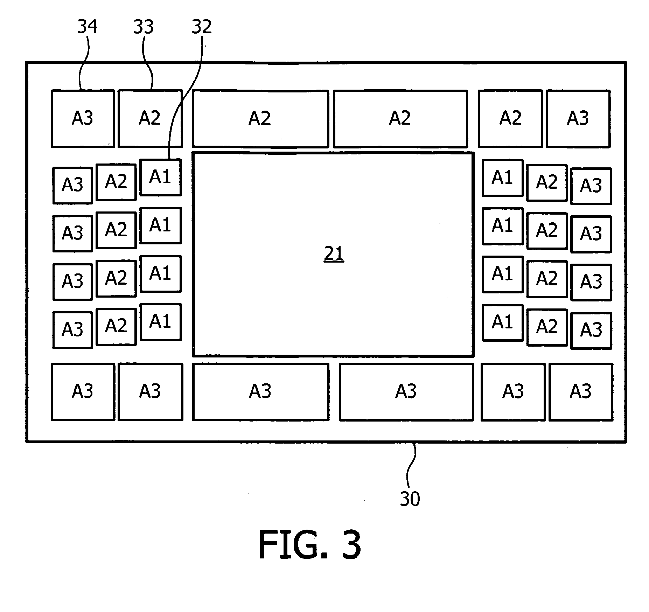

Fig 3 illustrates an embodiment of a display system 30, in which different illumination areas 32, 33, 34 of the system have different reaction times indicated by A1, A2, A3.

In an embodiment, illumination area A1 of the display system closest to the image display region 21 respond very fast to the image content presented in the display region. The illumination areas A2 and A3 further away from the display region react with longer integration time, corresponding to color summation over an increased number of frames, so that fast changing of colors are filtered, i.e. smoothened, out. Temporal delay just generates the same fast generating colors, only at a later moment in time.

In an embodiment the control unit is capable of integrating the received signal from the monitor unit for the affected illumination areas over time, corresponding to color summation over a number of frames of the presented image content. Longer integration time corresponds to increased number of frames. This provides the advantage of smooth changing colors of illumination areas with long integration time and rapid color changes of illumination areas with short integration time.

In some embodiments the emitted color from the illumination areas, using the longest reaction times, represents the background color of the current image or image sequence presented in the display region.

In some embodiments, the illumination areas at the bottom and top of the display region 21 have longer integration time than the illumination areas laterally closest to the display region. Tests have shown that these areas should not be too restless and hence this is an advantage of the embodiment.

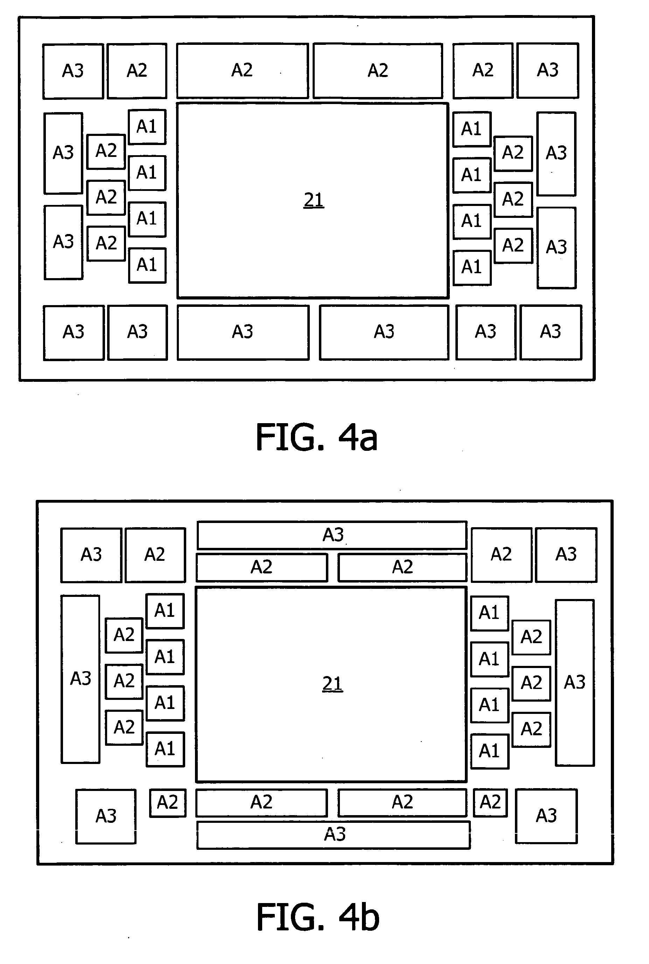

Display system setups other than those described above are equally possible and are obvious to a skilled person and fall under the scope of the invention, such as the setups illustrated in Fig. 4a and 4b.

In an embodiment the control unit utilizes several reaction times for different illumination areas.

In an embodiment the control unit utilizes reaction times that are synchronized with the frame rate of the display device for illumination areas laterally close to the display region, and hence these illumination areas respond in a frame synchronous manner. Tests have indicated that higher refresh rates than the source frame rate are not required. This means that the highest current update rate is 60 Hz, thus corresponding to a frame rate of 17 ms. A display system utilizing this frame rate would be really real-time.

In an embodiment the integration time is 4 frames for areas close to the display region so as to hide flickering effects. This means that if the image content in a monitoring region goes from black to white, 4 frames later or 68 ms on a 60 Hz system the corresponding illumination area would be fully white as well and there in between would be grey values. The reaction time of the illumination areas further away depends on the distance to the content and a personal factor. Currently the most relaxed settings use approximately 100-200 frames meaning that a sudden change from black to white in the image content requires 1.5 to 2 seconds before the display system has completely followed this effect.

In an embodiment the integration time of approximately 100 frames is used for illumination areas that are positioned in the viewing room wherein the display system is located. As an example the illumination areas could be located behind the speakers, situated far away from the display region in the viewing room.

In an embodiment the illumination areas A1, A2, and A3, as indicated in Figs. 2, 3, 4a, and 4b, uses 4 frames (0,07 s at 60 Hz), 12 frames (0,2 s at 60 Hz), and approximately30 frames (0.5 s at 60Hz), respectively. Moreover, additional illumination areas, e.g. comprised in light stands (not shown) for instance located in the corners of the viewing room, may use an integration time of approximately 90 frames (1,5 s at 60Hz).

In an embodiment the display system comprises illumination areas that are located far away from the display region. The illumination areas may be integrated in speakers, light stands, and all sorts of furniture located in the viewing room.

In an embodiment the reaction times corresponds to different integration times or factors for each position of the illumination area. For example in Fig. 3, Fig. 4a and Fig. 4b, illumination areas A1 will react frame synchronous, illumination areas A2 will have slight integration over time, and illumination areas A3 will have heavy integration over time.

In an embodiment the illumination areas using reaction time A3 is modulated according to the background color of the image or image sequence content, which provides slow changes. This may also be achieved by using a large monitoring region of the display region and heavy integration time.

In an embodiment the control unit further utilizes actions occurring in the display region to control the reaction time of each illumination area. In this way the reaction times of illumination areas which are integrated over time, such as A2 and A3, changes immediately when an action, such as a scene change is detected in the display region in order to keep the smooth continuation of the display region into the backlighting. This means that some illumination areas that are integrated over time, when a scene change is detected, instantly may become frame synchronous to increase the viewing performance of rapid changes in the display region.

In an embodiment the control unit further controls the reaction time of each illumination area depending on image or image sequence content presented in the display region. This means that the reaction times are variables depending on both the image or image sequence content and their individual position within the display system. The reaction times of the illumination area may be used to create different viewing experiences and/or state of minds to a user. Illumination areas with short reaction times in the periphery may create stressful and /or restless viewing, however in some cases it may be desired to increase this effect of sudden actions, movements etc to all of the illumination areas for a short period of time. This is performed by letting the reaction time of each illumination area both be dependent on its position within the display system and the action content of the presented image or image sequence on the display region. An advantage of this embodiment is that when no sudden actions is presented in the display region the illumination areas have different reaction times depending on their individual position as explained above, which provides a more peaceful backlighting effect while still being able to stress action happening in the display region, e.g. motion and scene changes. On the other hand when very rapid actions occur in the display region, such as a scene change, the reaction times for at least some of the illumination areas are instantly changed to a low value to provide an optimal viewing performance during the rapid change. Immediately after the rapid change the illumination area reaction times return to the same values that they had before the rapid change.

The action triggering the change of the reaction times of individual illumination areas may be measured as a threshold value based on an action signal corresponding to the action in the display region. If the action signal is below the threshold value the reaction times are mainly dependent on the position of the illumination areas. However, when the action signal is above the threshold value the reaction times changes simultaneously. As an example, all illumination area reaction times may be set to the same value as the illumination areas with the lowest reaction time, such as A1 in Figs. 3, 4a and 4b.

The best known method of extracting actions, such as motions from content is by comparing different frames and doing so, generating a vector field indicating the direction and speed with which pixels move. In practice macro blocks consist of several pixels and lines, e.g. 128 x 128, because pixel based processing would require too much computational capacity. Such a vector field may then be used to identify where motion is present.

In an embodiment the monitor unit generates the action signal.

In another embodiment the control unit generates the action signal.

In another embodiment the reaction times of the individual illumination areas are changed by user interaction, e.g. using the menu system on the display device when dealing with an integrated display system or using an external setup device when using a stand-alone display system.

An advantage of the display system according to the above-described embodiments is that both motion and background continuation is taken into account without disturbing the display region 21 viewing experience. As the human eye provides most resolution in the central part of the field of view and poorer resolution further away from the central part of the field of view, the viewer will have increased experience of the actions, such as motions, happening on the display region by the fast reacting illumination areas close to the display region and at the same time a smoother and peaceful experience in the periphery via the slower reacting illumination areas.

In an embodiment of the present invention the reaction time of a certain illumination area is made dependent on its position within the total backlighting surrounding. An advantage of this embodiment is that this results in a more peaceful backlighting effect while still being able to stress action happening on the main screen (e.g. motion).

In an embodiment the display system is connected to audio speakers connected to the display device for providing backlighting effects based on the audio content of in the presented image or image sequence. A single effect generator may drive the display system. In this embodiment the backlighting effect is generated purely from the audio while a user is watching a video clip. Based on the same principle as mentioned in embodiments above illumination areas close to the display region may emit light being very quickly changing but that illumination areas further away may emit light being more relaxed. In this way attention is focused on the display region while relaxing effects appears in the periphery of the view of the user.

In an embodiment the display system is not connected to a display device, but instead an audio device, such as a receiver, CD, DVD etc. Based on the same principle as mentioned above using different reaction speeds for different positions of illumination areas the display system provides a backlighting effect merely based on audio content, such as frequency and intensity. As an example, illumination areas close to the speaker react faster based on the audio content than illumination areas located further away from the speaker. The display system further comprises a color generator for generating colors based on the audio content, or user predefined modes of state of minds.

Combined solutions are also possible. As an example, the illumination areas located close to the display region may be audio based and the illumination areas farther away from the display region may be video based.

There are several ways of how to create the illumination area input signals, using which algorithms etc. In a simple example the algorithm just repeats the average or peak color of a certain monitoring area to its corresponding illumination area, however several algorithms are known in this regard and may be utilized by the display system according to some embodiment of the invention.

The devices used are integrated in the video processing chain of the AmbiLight TV. This could be a (DSP) part of a video processor that is also used for e.g. Natural Motion, it could also be a post processing, programmes in for example an EPLD. Of course a PC could also generate the effect,

In an embodiment the color to be emitted by an illumination area is extracted from a scripted effect. This capability could be integrated into the monitor unit or control unit according to some embodiments. As an example, the Philips amBX solution could generate a single color next to the screen. When mapping that single color onto a display system according to some embodiments, that can display more colors simultaneously, such as more pixels, colors close to the display region could really follow the script but colors further away could integrate the script colors over time so sudden effects, such as wanted effects because they are in the script, are a little smoothened out to get a more relaxed corner of the eye experience.

The monitor unit and control unit may comprise one or several processors with or several memories. The processor may be any of variety of processors, such as Intel or AMD processors, CPUs, microprocessors, Programmable Intelligent Computer (PIC) microcontrollers, Digital Signal Processors (DSP), Electrically Programmable Logic Devices (EPLD) etc. However, the scope of the invention is not limited to these specific processors. The processor may run a computer program comprising code segments for performing image analysis of the image content in the display region in order to produce an input signal dependent on the color and brightness of the image content that is fed to an illumination area. The memory may be any memory capable of storing information, such as Random Access Memories (RAM) such as, Double Density RAM (DDR, DDR2), Single Density RAM (SDRAM), Static RAM (SRAM), Dynamic RAM (DRAM), Video RAM (VRAM), etc. The memory may also be a FLASH memory such as a USB, Compact Flash, SmartMedia, MMC memory, MemoryStick, SD Card, MiniSD, MicroSD, xD Card, TransFlash, and MicroDrive memory etc. However, the scope of the invention is not limited to these specific memories.

In an embodiment the monitor unit and the control unit is comprised in one unit.

In some embodiments several monitor units and control units may be comprised in the display system.

The display system according to some embodiments may comprise display devices having display regions such as TVs, flat TVs, cathode ray tubes CRTs, liquid crystal displays LCDs, plasma discharge displays, projection displays, thin-film printed optically-active polymer display or a display using functionally equivalent display technology.

In an embodiment the illumination areas are integrated with the display device.

In other embodiments the illumination areas may be stand-alone with connectivity to the display device.

In an embodiment the display system is positioned substantially behind the image display region and arranged to project light radiation towards a surface disposed behind the display region. In use the display system provides illumination of at least at part around the display region of a display device.

In use the display system works as a spatially extension of the display region that increases viewing experience. The illumination areas utilize different reaction times depending on their position in within the display system and hence rapid motions presented in the display region will result in a rapid response of those illumination areas with rapid reaction time. Other illumination areas of the display system will react more calmly and these illumination areas may be positioned in the periphery of the display region and represent the background color of the presented image or image sequence in the display region.

In an embodiment the input signal to at least one illumination area is based on audio content presented on the display device.

In an embodiment the input signal to at least one illumination area is based on a combination of audio and image content presented on the display device.

In an embodiment algorithms are used that do not analyze the display region content at all but purely base the color further away on other parameters, e.g. "mood" of the content (see the amBX and audio embodiments above).

In another embodiment the backlighting effect is updated less frequently further away from the screen. Steps in colors would in this embodiment become visible but it does not change as fast as the effect close to the screen.

In an embodiment a system, according to Fig. 1, is provided. The system comprises a monitor unit 11 configured to monitor an information signal, and to generate a first signal based at least partly on the information comprised in the information signal, a control unit 12 configured to control properties of light radiation emitted from at least two illumination areas 13 comprised in the system, based on the first signal and the position of each illumination area in the system 10, and the reaction time of each illumination area depending on the position of each illumination area in the system 10.

The information signal may be an image or image sequence data signal, audio signal or a combined information signal. The information signal may comprise parameters such as intensity, brightness, color, and frequency.

In an embodiment the properties of light radiation is color, intensity and/or brightness.

The first signal may comprise information such as which monitoring region of the display region corresponds to which illumination area, each illumination area color, brightness, frequency etc.

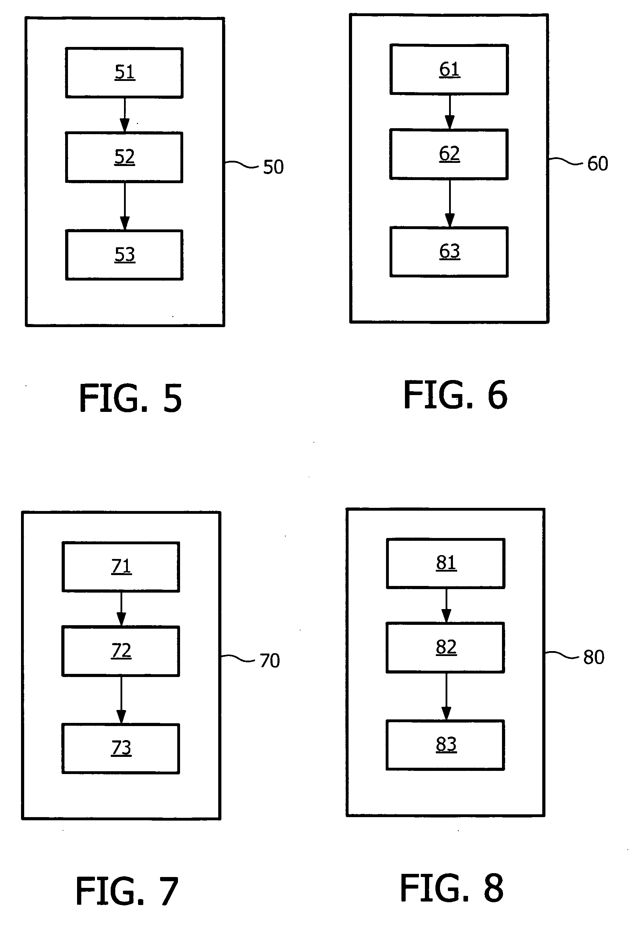

In an embodiment, according to Fig. 5, a method 50 is provided for operating a display system for use in conjunction with a display device comprising a display region capable of presenting an image or image sequence to a viewer, wherein the display system comprises at least two illumination areas capable of emitting light radiation. The method comprises, monitoring 51 at least the intensity and color in one or more monitoring regions of the display region when an image or image sequence is presented thereon, generating 52 a first signal, and controlling 53 light radiation emitted from the at least two illumination areas in response to the signal and the position of each illumination area within the system, and the reaction time of each illumination area depending on each illumination area position within the display system.

In an embodiment, according to Fig. 6, a method 60 is provided. The method comprises monitoring 61 an information signal, generating 62 a first signal based at least partly on the information comprised in the information signal, controlling 63 properties of light radiation emitted from at least two illumination areas, based on the first signal and the relative position of each illumination area, and the reaction time of each illumination area depending on the relative position of each illumination area.

In an embodiment, according to Fig. 7, a computer-readable medium 70 having embodied thereon a computer program for processing by a processor is provided for operating a display system for use in conjunction with a display device comprising a display region capable of presenting an image or image sequence to a viewer, wherein the display system comprises at least two illumination areas capable of emitting light radiation. The computer program comprises a monitor code segment 71 for monitoring at least the intensity and color in one or more monitoring regions of the display region when an image or image sequence is presented thereon, a generation code segment 72 for generating a first signal, and a control code segment 73 for controlling light radiation emitted from the at least two illumination areas based on the signal and the position of each illumination area within the system, and the reaction time of each illumination area depending on each illumination area position within the display system.

In an embodiment, according to Fig. 8, a computer-readable medium 80 is provided having embodied thereon a computer program for processing by a processor. The computer program comprises a monitor code segment 81 for monitoring an information signal, a generation code segment 82 for generating a first signal based at least partly on the information comprised in the information signal, a control code segment 83 for controlling properties of light radiation emitted from at least two illumination areas, based on the first signal and the relative position of each illumination area, and the reaction time of each illumination area depending on the relative position of each illumination area.

In an embodiment the computer-readable medium comprises code segments arranged, when run by an apparatus having computer-processing properties, for performing all of the method steps defined in some embodiments.

In an embodiment the computer-readable medium comprises code segments arranged, when run by an apparatus having computer-processing properties, for performing all of the display system functionalities defined in some embodiments.

Applications and use of the above-described embodiments according to the invention are various and include all cases, in which backlighting is desired.

The invention may be implemented in any suitable form including hardware, software, firmware or any combination of these. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Although the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

In summary, a system suitable for backlighting is provided. The system comprises a monitor unit configured to monitor an information signal, and to generate a first signal based at least partly on the information comprised in the information signal, a control unit configured to control properties of light radiation emitted from at least two illumination areas comprised in the system, based on the first signal and the position of each illumination area in the system, and the reaction time of each illumination area depending on the position of each illumination area in the system. The system provides for a more peaceful backlighting effect while still being able to stress action happening on the main screen (e.g. motion). A method and computer-readable medium is also provided.

## Claims

1. A display system (10) comprising
- a monitor unit (11) configured to monitor an information signal comprising image sequence data, and to generate a first signal based on the image information comprised in said information signal,
- a display region (21) capable of presenting said information signal to a user,
- a control unit (12) configured to control properties of light radiation emitted from at least two illumination areas (22, 23, 24, 25, 26, 27, 32, 33, 34), based on said first signal and the position of each illumination area in said display system (10);
wherein the reaction time for controlling said properties of light of each illumination area is an integration time and is based on the distance of the illumination area from the display region (21), said distance reflecting the relative position of the illumination area in said display system (10).

2. The display system according to claim 1, wherein said information signal is an image or image sequence data signal.

3. The display system according to claim 1 or 2, wherein said properties of light is based on the intensity and color in one or more monitoring regions of the display region (21) when an image or image sequence is presented thereon, and wherein said first signal comprises information regarding at least said intensity and color of each monitoring region.

4. The display system according to claim 3, wherein a monitoring region corresponds to at least one or more illumination areas.

5. The display system according to any one of the previous claims, wherein the reaction time of an illumination area corresponds to integration of said first signal over time.

6. The display system according to claim any one of the previous claims, wherein the reaction time of at least one illumination area is frame synchronous to the information signal content.

7. The display system according to claim any one of the previous claims, wherein the reaction time of at least one illumination area is integrated over at least two frames of the information signal content.

8. The display system according to any one of the previous claims, wherein the reaction time for at least one illumination area is changed by said control unit when an action, such as a scene change, is detected in said display region when an image sequence is presented thereon.

9. The display system according to any one of the previous claims, wherein at least one illumination area comprises a source of illumination.

10. The display system according to any one of the claims 1-4, wherein said display region (21) is comprised in a display device.

11. The display system according to any one of the previous claims being comprised in a projector.

12. The display system according to any one of the claims 1-4, wherein said display region and said at least two illumination areas are projected on a surface, using a projector.

13. The system according to claim 1, wherein the information signal further comprises audio data.

14. The display system according to any one the previous claims, wherein the reaction time for at least one illumination area is user-selected.

15. A method comprising
- monitoring an information signal comprising image sequence data,
- generating a first signal based on the image information comprised in said information signal,
- controlling properties of light radiation emitted from at least two illumination areas, based on said first signal and the relative position of each illumination area,
wherein the reaction time for controlling said properties of light of each illumination area is an integration time and is based on the distance of the illumination area from a display region (21) capable of presenting said information signal to a user, said distance reflecting the relative position of the illumination area in a display system (10).

16. A computer-readable medium (80) having embodied thereon a computer program for processing by a processor, said computer program comprising
- a monitor code segment (81) for monitoring an information signal comprising image sequence data,
- a generation code segment (82) for generating a first signal based on the image information comprised in said information signal,
- a control code segment (83) for controlling properties of light radiation emitted from at least two illumination areas, based on:
said first signal and the relative position of each illumination area;
wherein the reaction time for controlling said properties of light of each illumination area is an integration time and is based on the distance of the illumination area from a display region (21) capable of presenting said information signal to a user, said distance reflecting the relative position of the illumination area in a display system (10).

17. The computer-readable medium according to claim 16, comprising code segments arranged, when run by an apparatus having computer-processing properties, for performing all of the system functionalities defined in all of the claims 1-14.

## Patentansprüche

1. Wiedergabesystem (10), das Folgendes umfasst:
- eine Monitoreinheit (11) zum Überwachen eines Informationssignals mit Bildfolgedaten, und zum Erzeugen eines ersten Signals auf Basis der in dem genannten Informationssignal vorhandenen Bildinformation,
- ein Wiedergabegebiet (21), das imstande ist, einem Benutzer das genannte Informationssignal zu präsentieren,
- eine Steuereinheit (12) zum Steuern von Eigenschaften von Lichtstrahlung, die von wenigstens zwei Beleuchtungsgebieten (22, 23, 24, 25, 26, 27, 32, 33, 34) ausgestrahlt wird, und zwar auf Basis des genannten ersten Signals und der Lage jedes Beleuchtungsgebietes in dem genannten Wiedergabesystem (10),
- wobei die Reaktionszeit zum Steuern der genannten Lichteigenschaften jedes Beleuchtungsgebietes eine Integrationszeit ist und auf dem Abstand des Beleuchtungsgebietes von dem Wiedergabegebiet (21) basiert, wobei der genannte Abstand die relative Lage des Beleuchtungsgebietes in dem genannten Wiedergabesystem (10) reflektiert.

2. Wiedergabesystem nach Anspruch 1, wobei das genannte Informationssignal ein Bild oder Bildfolgedatensignal ist.

3. Wiedergabesystem nach Anspruch 1 oder 2, wobei die genannten Lichteigenschaften auf der Intensität und der Farbe in einem oder mehreren Überwachungsgebieten des Wiedergabegebietes (21) basieren, wenn daran ein Bild oder eine Bildfolge präsentiert wird, und wobei das genannte erste Signal Information in Bezug auf wenigstens die genannte Intensität und Farbe jedes Überwachungsgebietes aufweist.

4. Wiedergabesystem nach Anspruch 3, wobei ein Überwachungsgebiet wenigstens einem oder mehreren Beleuchtungsgebieten entspricht.

5. Wiedergabesystem nach einem der vorstehenden Ansprüche, wobei die Reaktionszeit eines Beleuchtungsgebietes einer Zeitintegration des genannten ersten Signals entspricht.

6. Wiedergabesystem nach einem der vorstehenden Ansprüche, wobei die Reaktionszeit wenigstens eines Beleuchtungsgebietes dem Informationssignalinhalt Framesynchron ist.

7. Wiedergabesystem nach einem der vorstehenden Ansprüche, wobei die Reaktionszeit wenigstens eines Beleuchtungsgebietes über wenigstens zwei Frames des Informationssignalinhalts integriert ist.

8. Wiedergabesystem nach einem der vorstehenden Ansprüche, wobei die Reaktionszeit für wenigstens ein Beleuchtungsgebiet durch die genannte Steuereinheit geändert wird, wenn eine Aktion, wie ein Szenenwechsel, in dem genannten Wiedergabegebiet detektiert wird, wenn eine Bildfolge darauf präsentiert wird.

9. Wiedergabesystem nach einem der vorstehenden Ansprüche, wobei wenigstens ein Beleuchtungsgebiet eine Beleuchtungsquelle aufweist.

10. Wiedergabesystem nach einem der Ansprüche 1 - 4, wobei das genannte Wiedergabegebiet (21) sich in einer Wiedergabeanordnung befindet.

11. Wiedergabesystem nach einem der vorstehenden Ansprüche in einem Projektor.

12. Wiedergabesystem nach einem der Ansprüche 1 - 4, wobei das genannte Wiedergabegebiet und die genannten wenigstens zwei Beleuchtungsgebiete unter Verwendung eines Projektors auf eine Oberfläche projiziert werden.

13. System nach Anspruch 1, wobei das Informationssignal weiterhin Audiodaten aufweist.

14. Wiedergabesystem nach einem der vorstehenden Ansprüche, wobei die Reaktionszeit für wenigstens ein Beleuchtungsgebiet vom Benutzer selektiert wird.

15. Verfahren, das Folgendes umfasst:
- Überwachung eines Informationssignals mit Bildfolgedaten,
- Erzeugung eines ersten Signals auf Basis der in dem genannten Informationssignal vorhandenen Bildinformation,
- Steuerung von Eigenschaften von Lichtstrahlung, die von wenigstens zwei Beleuchtungsgebieten ausgestrahlt wird, und zwar auf Basis des genannten ersten Signals und der relativen Lage jedes Beleuchtungsgebietes
- wobei die Reaktionszeit zum Steuern der genannten Lichteigenschaften jedes Beleuchtungsgebietes eine Integrationszeit ist und auf dem Abstand des Beleuchtungsgebietes von dem Wiedergabegebiet (21) basiert, mit der Möglichkeit das genannte Informationssignal einem Benutzer zu präsentieren, wobei der genannte Abstand die relative Lage des Beleuchtungsgebietes in dem genannten Wiedergabesystem (10) reflektiert.

16. Computer-lesbares Medium (80) mit einem Computerprogramm zum Verarbeiten mit Hilfe eines Prozessors, wobei das genannte Computerprogramm Folgendes umfasst:
- ein Monitorcodesegment (81) zum Überwachen eines Informationssignals mit Bildfolgedaten,
- ein Erzeugungscodesegment (82) zum Erzeugen eines ersten Signals auf Basi9s der in dem genannten Informationssignal vorhandenen Information,
- ein Steuercodesegment (83) zum Steuern von Eigenschaften von Lichtstrahlung, die von wenigstens zwei Beleuchtungsgebieten ausgestrahlt wird, und zwar auf Basis von dem genannten ersten Signal und der relativen Lage jedes Beleuchtungsgebietes;
- wobei die Reaktionszeit zum Steuern der genannten Lichteigenschaften jedes Beleuchtungsgebietes eine Integrationszeit ist und auf dem Abstand des Beleuchtungsgebietes von dem Wiedergabegebiet (21) basiert, mit der Möglichkeit das genannte Informationssignal einem Benutzer zu präsentieren, wobei der genannte Abstand die relative Lage des Beleuchtungsgebietes in dem genannten Wiedergabesystem (10) reflektiert.

17. Computer-lesbares Medium nach Anspruch 16 mit Codesegmenten, vorgesehen, wenn von einem Apparat mit Computerverarbeitungseigenschaften durchgeführt, zum Durchführen aller in all den Ansprüchen 1 - 14 definierten Funktionalitäten.

## Revendications

1. Système d'affichage (10) comprenant :
- une unité de contrôle (11) qui est configurée de manière à surveiller un signal d'information comprenant des données de séquence d'images et à générer un premier signal sur la base de l'information d'image qui est contenue dans ledit signal d'information,
- une région d'affichage (21) qui est capable de présenter ledit signal d'information à un utilisateur,
- une unité de commande (12) qui est configurée de manière à commander des propriétés d'un rayonnement de lumière qui est émis à partir d'au moins deux zones d'éclairement (22, 23, 24, 25, 26, 27, 32, 33, 34) sur la base dudit premier signal et de la position de chaque zone d'éclairement dans ledit système d'affichage (10);
- dans lequel le temps de réaction pour commander lesdites propriétés de lumière de chaque zone d'éclairement est un temps d'intégration et est basé sur la distance de la zone d'éclairement à partir de la région d'affichage (21), ladite distance réfléchissant la position relative de la zone d'éclairement dans ledit système d'affichage (10).

2. Système d'affichage selon la revendication 1, dans lequel ledit signal d'information est une image ou un signal de données de séquence d'images.

3. Système d'affichage selon la revendication 1 ou selon la revendication 2, dans lequel lesdites propriétés de lumière sont basées sur l'intensité et la couleur dans une ou plusieurs régions de contrôle de la région d'affichage (21) lorsqu'une image ou une séquence d'images y est présentée, et dans lequel ledit premier signal comprend de l'information quant à au moins ladite intensité et ladite couleur de chaque région de contrôle.

4. Système d'affichage selon la revendication 3, dans lequel une région de contrôle correspond à au moins une ou à plusieurs zones d'éclairement.

5. Système d'affichage selon l'une quelconque des revendications précédentes 1 à 4, dans lequel le temps de réaction d'une zone d'éclairement correspond à l'intégration dudit premier signal au fil du temps.

6. Système d'affichage selon l'une quelconque des revendications précédentes 1 à 5, dans lequel le temps de réaction d'au moins une zone d'éclairement est synchrone quant à la trame avec le contenu du signal d'information.

7. Système d'affichage selon l'une quelconque des revendications précédentes 1 à 6, dans lequel le temps de réaction d'au moins une zone d'éclairement est intégré sur au moins deux trames du contenu du signal d'information.

8. Système d'affichage selon l'une quelconque des revendications précédentes 1 à 7, dans lequel le temps de réaction pour au moins une zone d'éclairement est modifié par ladite unité de commande lorsqu'une action, telle qu'un changement de scène, est détectée dans ladite région d'affichage lorsqu'une séquence d'images y est présentée.

9. Système d'affichage selon l'une quelconque des revendications précédentes 1 à 8, dans lequel au moins une zone d'éclairement comprend une source d'éclairement.

10. Système d'affichage selon l'une quelconque des revendications précédentes 1 à 4, dans lequel ladite région d'affichage (21) est comprise dans un dispositif d'affichage.

11. Système d'affichage selon l'une quelconque des revendications précédentes 1 à 10 qui est compris dans un projecteur.

12. Système d'affichage selon l'une quelconque des revendications précédentes 1 à 4, dans lequel ladite région d'affichage et lesdites au moins deux zones d'éclairement sont projetées sur une surface à l'aide d'un projecteur.

13. Système selon la revendication 1, dans lequel le signal d'information comprend en outre des données audio.

14. Système d'affichage selon l'une quelconque des revendications précédentes 1 à 13, dans lequel le temps de réaction pour au moins une zone d'éclairement est sélectionné par l'utilisateur.

15. Procédé comprenant les étapes suivantes consistant à:
- contrôler un signal d'information comprenant des données de séquence d'images,
- générer un premier signal sur la base de l'information d'image qui est contenue dans ledit signal d'information,
- commander des propriétés d'un rayonnement de lumière qui est émis à partir d'au moins deux zones d'éclairement sur la base dudit premier signal et de la position de chaque zone d'éclairement,
- dans lequel le temps de réaction pour commander lesdites propriétés de lumière de chaque zone d'éclairement est un temps d'intégration et est basé sur la distance de la zone d'éclairement à partir d'une région d'affichage (21) qui est capable de présenter ledit signal d'information à un utilisateur, ladite distance réfléchissant la position relative de la zone d'éclairement dans un système d'affichage (10).

16. Support lisible par ordinateur (80) ayant mis en oeuvre sur celui-ci un programme informatique pour le traitement par un processeur, ledit programme informatique comprenant :
- un segment de code de contrôle (81) pour surveiller un signal d'information comprenant des données de séquence d'images,
- un segment de code de génération (82) pour générer un premier signal sur la base de l'information d'image qui est contenue dans ledit signal d'information,
- un segment de code de commande (83) pour commander des propriétés d'un rayonnement de lumière qui est émis à partir d'au moins deux zones d'éclairement sur la base dudit premier signal et de la position de chaque zone d'éclairement ;
- dans lequel le temps de réaction pour commander lesdites propriétés de lumière de chaque zone d'éclairement est un temps d'intégration et est basé sur la distance de la zone d'éclairement à partir d'une région d'affichage (21) qui est capable de présenter ledit signal d'information à un utilisateur, ladite distance réfléchissant la position relative de la zone d'éclairement dans un système d'affichage (10).

17. Support lisible par ordinateur selon la revendication 16, comprenant des segments de code qui sont agencés, lorsqu'il est exécuté par un appareil ayant des propriétés de traitement informatique, de manière à réaliser toutes les fonctionnalités du système qui sont définies dans toutes les revendications précédentes 1 à 14.
